# EUROPEAN PATENT APPLICATION

(11) **EP 1 260 555 A1**
(43) Date of publication of application: **27.11.2002**
(21) Application number: 02010754.6
(22) Date of filing: 14.05.2002
(51) Int. Cl.: C08L 101/06, C09D 201/06, C08J 3/24

(54) **Resin compositions**

(30) Priority: 16.05.2001 JP 2001145883
(71) Applicant: Kyowa Yuka Co., Ltd., Tokyo (JP)
(72) Inventor: Hotta, Iwao, Tokyo (JP); Murayama, Toshikazu, Yokkaichi-shi, Mie-ken (JP); Hagino, Harufumi, Yokkaichi-shi, Mie-ken (JP); Moriyama, Satoshi, Yokkaichi-shi, Mie-ken (JP); Murata, Shigeru, Yokkaichi-shi, Mie-ken (JP); Shimizu, Ikuo, Yokkaichi-shi, Mie-ken (JP)
(74) Representative: Casalonga, Axel

(57) **Abstract**

An object of the present invention is to provide a composition which provides a hardened product exhibiting superior electrical insulating properties, adhesiveness, or the like at the time of hardening the composition. The present invention provides a composition comprising a compound having a group represented by the general formula (I): 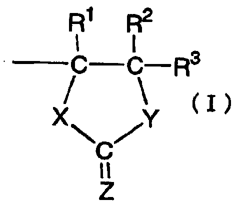 (in the formula, R¹, R², and R³ are identical or different, and represent a hydrogen atom or a lower alkyl group; X, Y, and Z are identical or different, and represent an oxygen atom or a sulfur atom, and at least two of X, Y, and Z represent a sulfur atom), and a compound having two or more acidic groups.

## Description

### BACKGROUND OF THE INVENTION

### 1. Field of the Invention

The present invention relates to a composition which exhibits good adhesiveness or adhesion to metals such as copper, silver, gold, or the like, plastics such as polyimide, an acrylonitrile-butadiene-styrene (ABS) resin, or the like, etc., and is useful for use in coating materials, adhesives, inks, sealants for building materials, lining agents for materials for construction, optical materials, sealants for printed boards, impregnation resins for prepregs, sealants for semiconductors, or the like.

### 2. Description of Background Art

A polymer or compound having a 5-membered-ring dithiocarbonate group in a molecular structure thereof is useful for various applications. It has been known that the above polymers or compounds are useful for use in coating materials, adhesives, inks, sealants for building materials, sealants for semiconductors, or the like.

For example, Japanese Unexamined Patent Application, First Publication No. Hei 9 - 59324 discloses a composition comprising a compound having a 5-membered-ring dithiocarbonate group and a compound having an amino group, a mercapto group, a phenol group, or the like. Unfortunately, the composition comprising a compound having a 5-membered-ring dithiocarbonate group and a compound having an amino group (N,N'-dimethyl-1,3-diaminopropane), which is substantially disclosed in the Example thereof, is difficult to apply to uses requiring high electrical insulating properties (such as sealants for printed boards, sealants for semiconductors, or the like) in view of low electrical resistance, hygroscopic properties, or the like.

In addition, Japanese Unexamined Patent Application, First Publication No. Hei 11 - 292969 discloses a polymer obtained by cationic polymerization of a compound in which a 5-membered-ring dithiocarbonate group is introduced in propylene oxide in the presence of trifluoromethanesulfonic acid or a polymer obtained by anionic polymerization of the compound in the presence of potassium tert-butoxide, in the Examples thereof. However, use of these polymers as, for example, sealants for semiconductors, laminates, or the like presents problems in heat resistance or the like, and therefore, satisfactory results for practical use cannot be obtained.

### SUMMARY OF THE INVENTION

An object of the present invention is to provide a composition which affords a hardened product exhibiting superior physical properties such as electrical insulating properties, adhesiveness, heat resistance, chemical resistance, weather resistance, moisture resistance, adhesion to metals, mechanical strength, or the like at the time of hardening the composition.

The present invention relates to a composition comprising a compound having a group represented by the general formula (I): 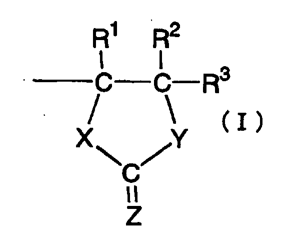 (in the formula, R¹, R², and R³ are identical or different, and represent a hydrogen atom or a lower alkyl group; X, Y, and Z are identical or different, and represent an oxygen atom or a sulfur atom, and at least two of X, Y, and Z represent a sulfur atom), and a compound having two or more acidic groups.

### DETAILED DESCRIPTION OF THE PREFERRED EMBODIMENTS

In the definition of each group shown in the general formulae in the specification, examples of the lower alkyl group may include straight-chain or branched alkyl groups having 1 to 6 carbon atoms, and among them, the alkyl groups having 1 to 4 carbon atoms are preferred. As examples of the lower alkyl group, mention may be made of, for example, a methyl group, an ethyl group, a propyl group, an isopropyl group, a butyl group, an isobutyl group, a sec-butyl group, a tert-butyl group, a pentyl group, an isopentyl group, a neopentyl group, a hexyl group, and the like.

Compounds wherein X represents an oxygen atom and Y and Z represent a sulfur atom in the general formula (I) are preferable.

### (1) With regard to a compound having a group represented by the general formula (I)

As a compound having a group represented by the general formula (I) (hereinafter, this compound may be referred to as "compound (I)"), a compound having two or more groups represented by the general formula (I) is preferable, and in addition, a vinyl polymer having a structural unit represented by the general formula (II): 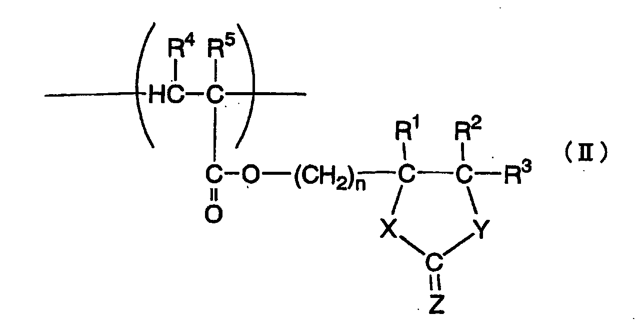 (in the formula, R¹, R², R³, X, Y, and Z have the same meanings as described above, respectively; n represents an integer of 1 to 4; and R⁴ and R⁵ are identical or different, and represent a hydrogen atom or a lower alkyl group) or a compound represented by the general formula (III): 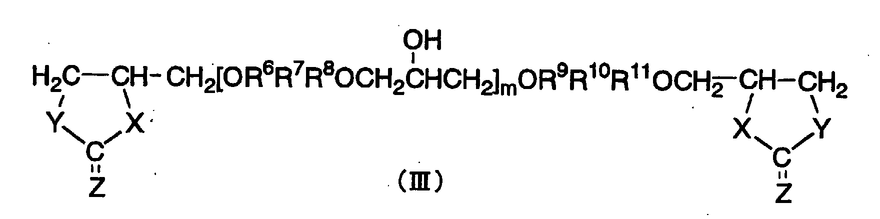 (in the formula, X, Y, and Z have the same meanings as described above, respectively; m represents an integer of 0 to 40; R⁶, R⁸, R⁹, and R¹¹ are identical or different, and represent a halogen-substituted or non-substituted phenylene or a halogen-substituted or non-substituted cyclohexylene; and R⁷ and R¹⁰ are identical or different, and represent methylene, C(CH₃)₂, an oxygen atom, CO, a sulfur atom, or SO₂) is preferably employed.

The vinyl polymer having a structural unit represented by the general formula (II) may be referred to as "polymer (II)" hereinafter. In addition, the compound represented by the general formula (III) may be referred to as "compound (III)".

Here, as examples of the halogen atom in the halogen-substituted phenylene and halogen-substituted cyclohexylene, mention may be made of a fluorine atom, a chlorine atom, a bromine atom, and an iodine atom.

Although the polymer (II) may be a homopolymer, it is preferably a copolymer, and a vinyl monomer which does not have a group represented by the general formula (I) may be included as a raw material of the same. Here, as examples of the vinyl monomer which does not have a group represented by the general formula (I), mention may be made of (meth)acrylic acid; alkyl (meth)acrylates made of an alcohol having 1 to 18 carbon atoms and (meth)acrylic acid, such as methyl (meth)acrylate, ethyl (meth)acrylate, butyl (meth)acrylate, isobutyl (meth)acrylate, tert-butyl (meth)acrylate, cyclohexyl (meth)acrylate, 2-ethylhexyl (meth)acrylate, lauryl (meth)acrylate, stearyl (meth)acrylate, and the like; aromatic vinyl compounds such as styrene, α-methylstyrene, p-methylstyrene, dimethylstyrene, divinylbenzene, and the like; hydroxyalkyl (meth)acrylates such as 2-hydroxyethyl (meth)acrylate, 2-hydroxypropyl (meth) acrylate, and the like; glycol di (meth) acrylates such as ethylene glycol di(meth)acrylate, butanediol di(meth)acrylate, and the like; alkylaminoalkyl (meth)acrylates such as dimethylaminoethyl (meth)acrylate, and the like; fluorine-containing vinyl monomers such as trifluoroethyl (meth)acrylate, pentafluoropropyl (meth)acrylate, perfluorocyclohexyl (meth)acrylate, 2,2,3,3-tetrafluoropropyl (meth)acrylate, β-(perfluorooctyl)ethyl (meth)acrylate, and the like; siloxane-containing vinyl monomers such as 1-[3-(meth)acryloxypropyl]-1,1,3,3,3-pentamethyldisiloxane, 3-(meth)acryloxypropyl tris(trimethylsiloxane)silane, AK-5 [silicone macromonomer, produced by Toagosei Co., Ltd.], and the like; hydrolysable silyl-group-containing vinyl monomers such as vinyltrimethoxysilane, vinylmethyldimethoxysilane, 3-(meth)acryloxypropyltrimethoxysilane, 3-(meth)acryloxypropylmethyldimethoxysilane, 3-(meth)acryloxypropyltriethoxysilane, 3-(meth)acryloxypropyldiethoxysilane, and the like; vinyl ethers such as vinyl methyl ether, vinyl ethyl ether, vinyl isobutyl ether, and the like; polybasic unsaturated carboxylic acids such as fumaric acid, maleic acid, maleic anhydride, linseed oil fatty acid, tall oil fatty acid, dehydrated castor oil fatty acid, and the like, or esters of the same with a monohydric alcohol or a polyhydric alcohol; publicly known vinyl monomers such as a dimethylaminoethyl (meth)acrylate methyl chloride salt, isobornyl (meth)acrylate, allyl alcohol, allyl alcohol esters, vinyl chloride, vinylidene chloride, trimethylolpropane tri(meth)acrylate, vinyl acetate, vinyl propionate, (meth)acrylonitrile, macromonomers AS-6, AN-6, AA-6, and AB-6 [produced by Toagosei Co., Ltd.]; and the like; etc. Among these, alkyl (meth)acrylates such as methyl (meth)acrylate, ethyl (meth)acrylate, butyl (meth)acrylate, isobutyl (meth)acrylate, tert-butyl (meth)acrylate, 2-ethylhexyl (meth) acrylate, and the like are preferably employed. In the above description, the term "(meth)acrylic acid" means acrylic acid and methacrylic acid, and other (meth) acrylic acid derivatives have the meanings similar to that described above. In addition, in the raw material of the polymer (II), the vinyl monomer having a group represented by the general formula (I) is preferably included in an amount of 0.2 to 90% by mole, and is more preferably included in an amount of 0.2 to 60% by mole.

In addition, the weight average molecular weight of the polymer (II) is preferably in a range of 1,000 to 400,000, and is more preferably in a range of 5,000 to 200,000. The glass transition temperature of the polymer (II) is preferably in a range of -30 to 180°C, and is more preferably in a range of 0 to 130°C.

Among the compounds (III), compounds wherein R⁶, R⁸, R⁹, and R¹¹ represent a bromine-substituted or non-substituted phenylene or a bromine-substituted or non-substituted cyclohexylene; and R⁷ and R¹⁰ represent methylene, C(CH₃)₂, a sulfur atom, or SO₂ are preferable, and compounds wherein m represents an integer of 0 to 20; R⁶, R⁸, R⁹, and R¹¹ represent phenylene; and R⁷ and R¹⁰ represent methylene or C(CH₃)₂ are more preferable.

The compound (I) can be prepared according to publicly known methods. For example, the compounds which are the compound (I) wherein X represents an oxygen atom, and Y and Z represent a sulfur atom can be prepared by reacting a compound having the corresponding oxirane ring and carbon disulfide in the presence of an alkali halide such as lithium bromide, according to a publicly known method (Japanese Unexamined Patent Application, First Publication No. Hei 5 - 247027; J. Org. Chem., 60, 473 (1995); Japanese Unexamined Patent Application, First Publication No. Hei 9 - 59324; WO 98/26005; or the like) . In addition, the compounds which are the compound (I) wherein X, Y, and Z represent a sulfur atom can be prepared by, for example, reacting a compound having the corresponding oxirane ring and carbon disulfide in the presence of an organic amine such as triethylamine, under pressure (for example, 70,000 to 90,000 kPa) at 90 to 120°C (Bull. Chem. Soc. Jpn., 61 (3), 921 (1988)). The compounds having an oxirane ring are commercially available or can be prepared by reacting the corresponding compound and epichlorohydrine in the presence of a base according to a publicly known method (Ether synthesis method by Williamson, or the like).

In addition, in the case where the compound (I) is a polymer, the desired polymer may be prepared by preliminarily inserting the group represented by the general formula (I) in a polymeric monomer, followed by polymerization of the obtained monomer (Japanese Unexamined Patent Application, First Publication No. Hei 9 - 59324, and Japanese Unexamined Patent Application, First Publication No. Hei 7 - 62190).

### (2) With regard to a compound having two or more acidic groups

As the acidic group of the compound having two or more acidic groups, the one having the pKa of 11 or less is preferable, and in addition, a mercapto group, a carboxyl group, a phenolic hydroxyl group, or the like is preferable. Among these, a phenolic hydroxyl group is more preferable.

As examples of a compound having two or more phenolic hydroxyl groups, mention may be made of a phenol novolak resin, an orthocresol novolak resin, a bisphenol A novolak resin, a bisphenol F novolak resin, a phenol-dicyclopentadiene polyaddition type resin, a naphthol novolak resin, a dihydroxynaphthalene novolak resin, polyhydric phenols having a xylidene group as a bonding group, a phenol-aralkyl resin, and the like.

As examples of a compound having two or more mercapto groups, mention may be made of bis(2-mercaptoethyl) ether, a compound in which an epoxy group is partially added to said compound, pentaerythritol tetrathioglycol, dipentaerythritol hexathioglycol, thioglycolates such as trimethylolpropane trithioglycolate and the like, a polysulfide gum having a mercapto group at the terminal, and the like.

As examples of a compound having two or more carboxyl groups, mention may be made of, for example, polycarboxylic acids such as adipic acid, azelaic acid, decanedicarboxylic acid, and the like.

The compound having two or more acidic groups is employed so that the acidic group is present in an amount of 0.1 to 100 times the mole, and preferably in an amount of 1 to 50 times the mole, with respect to the group represented by the general formula (I) in the compound (I).

The compounds having two or more acidic groups are employed alone or in combination of two or more of the same.

### (3) With regard to a composition of the present invention

A composition of the present invention can be produced by mixing the compound (I) and the compound having two or more acidic groups. Addition orders, methods for addition, and methods for mixing are not particularly restricted. In addition, for use in various applications, the compositions may be provided in the form of a kit comprising a component including the compound (I) and another component including the compound having two or more acidic groups (two-pack type coating materials, two-pack type adhesives, and the like).

In addition, a composition of the present invention may include a compound having an epoxy group. The compositions of the present invention, including a compound having an epoxy group provide hardened products which exhibit superior toughness, heat resistance, moisture resistance, or the like, at the time of hardening the composition. In addition, the compositions with a compound having an epoxy group have an advantage in that there is little odor in the compositions themselves and at the time of hardening the same.

As examples of a compound having an epoxy group, mention may be made of compounds represented by the general formula (IV) : 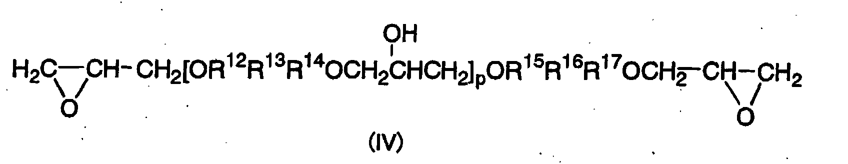 (in the formula, p represents an integer of 0 to 40; R¹², R¹⁴, R¹⁵, and R¹⁷ are identical or different, and represent a halogen-substituted or non-substituted phenylene or a halogen-substituted or non-substituted cyclohexylene; and R¹³ and R¹⁶ are identical or different, and represent methylene, C(CH₃)₂, an oxygen atom, CO, a sulfur atom, or SO₂), glycidyl ethers prepared by reacting epichlorohydrine and a phenol compound such as resorcinol, hydroquinone, pyrocatechol, bisphenol A, dihydroxydiphenylmethane (bisphenol F), bisphenol S, tetrabromobisphenol A, 1,3-bis(4-hydroxyphenyl)cyclohexane, 4,4'-dihydroxy-3,3'-dimethyldiphenylmethane, 4,4'-dihydroxybenzophenone, tris(4-hydroxyphenyl)methane, bis(4-hydroxyphenyl) ether, novolak phenol, novolak cresol, bis(4-hydroxyphenyl) sulfone, bis(3,5-dimethyl-4-hydroxphenyl) sulfone, or a hydrogenated product or a halide of the compound described above, and the like. Among these, the compounds represented by the general formula (IV) are preferably employed. In the definitions of the groups in the general formula (IV), the terms "halogen-substituted phenylene" and "halogen-substituted cyclohexylene" have the same meanings as described above, respectively.

The compound having an epoxy group is preferably employed so that a ratio of the molar numbers of the group represented by the general formula (I) to the molar numbers of the epoxy group in the composition is present in a range of 99.5/0.5 to 1/99, are more preferably employed so that the ratio is present in a range of 75/25 to 5/95, and most preferably employed so that the ratio is present in a range of 50/50 to 10/90.

The compounds having an epoxy group are employed alone or in combination of two or more of the same.

In the compositions of the present invention, various crosslinking agents or additives may be included.

As examples of crosslinking agents, mention may be made of, for example, a melamine resin, an oxazoline compound, an isocyanate compound, a silanol compound, an aziridine compound, and the like. The crosslinking agent is employed in an amount of 1 to 50% by weight with respect to the weight of the compound (I). These crosslinking agents may be employed alone or in combination of two or more of the same.

As examples of additives, mention may be made of, for example, fillers, plasticizers, thixotropic agents, age resistors, antioxidants, antistatic agents, agents for imparting adhesiveness, flame retarders, pigments, dispersing agents, solvents, and the like. The additives are employed alone or in combination of two or more of the same.

As fillers, those in the various forms can be employed. As examples of the same, mention may be made of, for example, organic or inorganic fillers such as fumed silica, burned silica, precipitated silica, pulverized silica, fused silica, diatomaceous earth, iron oxide, zinc oxide, titanium oxide, barium oxide, magnesium oxide, calcium carbonate, magnesium carbonate, zinc carbonate, agalmatolite clay, kaolin clay, burned clay, carbon black, and the like, and in addition, products obtained by treating these with a fatty acid, a resin acid, or an ester of a fatty acid, and the like.

As examples of plasticizers, mention may be made of dioctyl phthalate, dibutyl phthalate, dioctyl adipate, diisododecyl succinate, diethylene glycol dibenzoate, pentaerythritol esters, butyl oleate, methyl acetyl ricinolate, tricresyl phosphate, trioctyl phosphate, propylene glycol adipate polyester, butylene glycol adipate polyester, and the like.

As examples of thixotropic agents, mention may be made of, for example, Aerosil (produced by Japan Aerosil Co., Ltd.), Disparon (produced by Kusumoto Kasei Co., Ltd.), calcium carbonate, Teflon (trade mark), and the like.

As examples of age resistors, mention may be made of, for example, hindered phenol type compounds and the like.

As examples of antioxidants, mention may be made of, for example, butylhydroxytoluene, butylhydroxyanisole, and the like.

As examples of antistatic agents, mention may be made of, for example, quaternary ammonium salts, polyglycol derivatives, ethylene oxide derivatives, and the like.

As examples of agents for imparting adhesiveness, mention may be made of, for example, a terpene resin, a phenol resin, a terpene-phenol resin, a rosin resin, a xylene resin, and the like.

Flame retardants may include phosphorous type products, antimony type products, halogen type products, aluminum type products, magnesium type products, and the like. As examples of the same, mention may be made of, for example, zirconium hydroxide, barium metaborate, aluminum hydroxide, magnesium hydroxide, tricresyl phosphate, diphenyl cresyl phosphate, diphenyl octyl phosphate, tris(chloroethyl) phosphate, tributyl phosphate, tris(dibromopropyl) phosphate, chloroalkyl phosphate, ammonium polyphosphate, chlorophosphonates, bromophosphonates, dimethyl/methyl phosphonates, triphenylphosphine, ethane tetrabromide, chlorinated paraffin, chlorinated polyphenyl, antimony trioxide, antimony pentaoxide, neopentyl bromide - polyether, brominated polyether, and the like.

As examples of pigments, mention may be made of inorganic pigments such as titanium dioxide, zinc oxide, ultramarine blue, red iron oxide, lithopone, lead, cadmium, iron, cobalt, aluminum, and the like, and organic pigments such as azo pigments, copper phthalocyanine pigments, and the like, etc.

The compositions of the present invention exhibit good adhesiveness or adhesion to metals such as copper, silver, gold, or the like, or plastics such as polyimide, an acrylonitrile-butadiene-styrene (ABS) resin, or the like, and are useful for use in coating materials, adhesives, inks, sealants for building materials, lining agents for materials for construction, optical materials, sealants for printed boards, impregnation resins for prepregs, sealants for semiconductors, or the like.

In addition, the compositions of the present invention are hardened under conditions of ordinary temperature to conditions of heating (preferably in a range of 60 to 200°C, and more preferably in a range of 160 to 200°C), thus producing the corresponding hardened products. The compositions of the present invention have an advantage in that they can be hardened in a short period of time.

Furthermore, the compositions of the present invention provide hardened products exhibiting superior physical properties such as electrical insulating properties, adhesiveness, heat resistance, chemical resistance, weather resistance, moisture resistance, adhesion to metals, mechanical strength, or the like at the time of hardening the compositions.

In addition, in the case where the compositions of the present invention are employed as sealants for semiconductors, for example, the compounds having an epoxy group, crosslinking agents, fillers, flame retarders, or the like described above are added to the compositions of the present invention if necessary, followed by uniformly mixing the mixture by means of a mixer or the like. Subsequently, the mixture is kneaded by heat-melting (preferably at 60 to 100°C) bymeans of a thermal roll, a kneader, or the like, and is cooled, followed by pulverization. Subsequently, the pulverized mixture is formed into tablets. The obtained tablets are heat-melted (preferably at 60 to 100°C), and are subjected to coating on a material to be sealed, followed by further heating (preferably at 160 to 200°C), thus sealing the material.

In addition, as examples of base materials employed in the case of using the compositions of the present invention in prepregs, mention may be made of woven fabrics or non-woven fabrics of inorganic fibers such as glass or the like, or organic material fibers such as polyester, polyamide, polyacryl, polyimide, or the like, etc.

As examples of methods for producing prepregs from the compositions of the present invention, which are not particularly restricted, mention may be made of, for example, a method comprising the steps of impregnating the composition of the present invention in the base material, and drying by heating for semi-hardening, and the like. At the time of using this method, the compositions of the present invention may be dissolved in a solvent such as methyl ethyl ketone or the like to adjust the viscosity of the same. In addition, the step of drying by heating is preferably carried out, for example, for 1 to 40 minutes at 100 to 200°C. In addition, it is preferable that the amount of the solid materials in the prepregs range from 20 to 80% by weight.

As examples of methods for producing metal foils with a resin from the compositions of the present invention, which are not particularly restricted, mention may be made of, for example, a method comprising the steps of coating one surface of a metal foil with the composition of the present invention by means of a roll coater or the like, and drying by heating for semi-hardening, and the like. As examples of metal foils, mention may be made of metal foils formed by a single metal or two or more metals of copper, aluminum, brass, nickel, and the like, or metal foils formed by an alloy of the metals described above, and the like. At the time of coating the metal foil with the composition of the present invention, the composition of the present invention may be dissolved in a solvent such as methyl ethyl ketone or the like to adjust the viscosity of the same. In addition, the step of drying by heating is preferably carried out, for example, for 1 to 40 minutes at 100 to 200°C. In addition, it is preferable that the thickness of the resin layer in the metal foils with resins range from 5 to 80 µm.

In addition, as examples of methods for preparing adhesive sheets from the compositions of the present invention, which are not particularly restricted, mention may be made of, for example, a casting method and the like. For example, on a carrier film such as a polyester film, a polyimide film; or the like, the composition of the present invention is applied with a thickness preferably ranging from 5 to 100 µm, and is subsequently subjected to heat treatment for 1 to 40 minutes at 100 to 200°C, thus preparing an adhesive sheet. At the time of preparing an adhesive sheet, if a surface treatment is preliminarily carried out with a releasing agent on the carrier sheet to which a resin is to be applied, the resultant adhesive sheet can be easily released from the carrier sheet. In addition, it is preferable that the thickness of the adhesive sheet range from 5 to 80 µm.

Furthermore, a laminate can be produced from the prepreg, the metal foil with a resin, or the adhesive sheet, prepared as described above. In the following, a method for producing a laminate in the case of employing a prepreg is explained as an example.

In the case where a laminate is produced using a prepreg, for example, the prepregs are laminated, and metal foil(s) are arranged on one side or both sides, thus forming a laminated material. Subsequently, the laminated material is integrated by heating and pressing, thus producing a laminate. As examples of metal foils, mention may be made of metal foils formed by a single metal or two or more metals of copper, aluminum, brass, nickel, and the like, or metal foils formed by an alloy of the metals described above, and the like. It is preferable that the steps of heating and pressing the laminated material be carried out for 40 to 240 minutes at a temperature ranging from 160 to 220°C under a pressure ranging from 50 to 5000 Pa.

Furthermore, a multi-layered plate can also be produced by using the laminate as a single layer obtained described above as an inner layer.

In addition, producing laminates from the metal foils with a resin or adhesive sheets can be carried out in a manner similar to that described in the production of a laminate from the prepreg. The laminates obtained as described above can be employed as a laminate for use in printed boards, or the like.

In the following, the modes of the present invention will be explained by referring to Reference Examples and Examples. However, the Reference Examples and Examples should not be construed as limitations to the scope of the present invention.

### [Reference Example 1] Synthesis of a compound (Compound - 1)

In a flask equipped with a dropping device, a stirrer, a thermometer, a condenser tube, and an inlet tube for a nitrogen gas, 250 mL of carbon disulfide was added dropwise to a solution prepared by dissolving 620 g of a bisphenol A - epichlorohydrine type epoxy resin (Epicoat 828, produced by Japan Epoxy Resin Co., Ltd.) and 3 g of lithium bromide in 5 L of tetrahydrofuran, at 25°C. Subsequently, the inner temperature of the flask was raised to 45°C, and the reaction proceeded for 5 hours.

After the reaction, the reaction mixture was concentrated under reduced pressure. To the obtained residue, 5 L of chloroform and 3 L of water were added to carry out separation. To an extracted organic layer, 5 L of a saturated aqueous solution of sodium chloride was added, and again separation was carried out. The obtained organic layer was dehydrated over 300 g of magnesium sulfate, and subsequently chloroform was distilled off, yielding a crude product. The crude product was recrystallized from ethyl acetate, thus yielding 635 g of a purified product (Compound - 1).

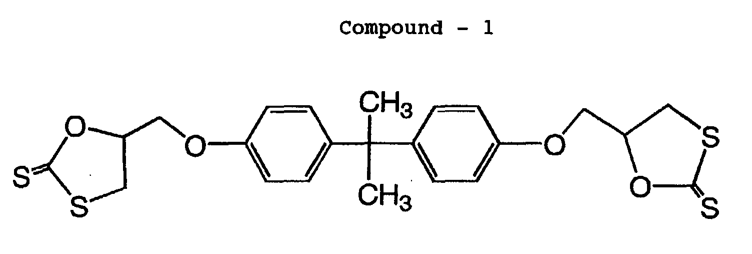

The results of NMR and IR analyses of the purified product are described below.

¹H-NMR (CDCl₃, δ ppm, 400 MHz): 1.63 (s, 18H), 2.52 (d, J = 5.1 Hz, 2H), 3.73 (dd, J = 7.1, 12.0 Hz, 2H), 3.78 (dd, J = 7.6, 8.0 Hz, 2H), 4.10 (dd, J = 5.6, 12.0 Hz, 4H), 4.13 (dd, J = 4.6, 8.0 Hz, 4H), 4.25 (dd, J = 5.6, 10.3 Hz, 2H), 4.30 (dd, J = 5.6, 10.3 Hz, 2H), 4.35 (q, J = 5.4 Hz, 2H), 5.42 (m, 2H), 6.81 (dd, J = 1.7, 8.8 Hz, 6H), 6.83 (dd, J = 2.0, 8.8 Hz, 6H), 7.13 (dd, J = 1.5, 8.0 Hz, 12 H)

IR (NaCl, cm⁻¹) : 508, 1184, 1241, 1606, 3037, 3442

### [Reference Example 2] Synthesis of a vinyl polymer

In a flask equipped with a dropping device, a stirrer, a thermometer, a condenser tube, and an inlet tube for a nitrogen gas, 150 g of cyclohexanone was placed, and was heated to 100°C. Subsequently, after the atmosphere in the flask was replaced with nitrogen, a mixture comprising 75.0 g of 5-(methacryloyloxymethyl)-1,3-oxathiolane-2-thione, 75.0 g of methyl methacrylate, and 0.5 g of 2,2'-azobis-2-methylbutyronitrile as a polymerization catalyst was dropwise added thereto over 2 hours at the same temperature. After the completion of the dropping, the reaction mixture was aged for 3 hours at 100°C to complete the polymerization, yielding a solution of a vinyl polymer having a solid part in an amount of 50% by weight and having a weight average molecular weight of 22,000. The weight average molecular weight was analyzed by means of gel permeation chromatography (GPC) according to the following method. In the Reference Example described below, the analysis was carried out in the same manner as described above.

Subsequently, 30 times by volume of hexane was prepared, and purification by reprecipitation was slowly carried out at room temperature. The precipitated polymers were collected by filtration, and were subsequently dried under reduced pressure for 12 hours at 40°C, thus yielding 125 g of polymer powders (Polymer - 1).
GPC analysis conditions
Column: TSKgel Super HM-M (2 columns) and HM-H (one column) (produced by TOSOH Corporation) were connected serially.
Column retention temperature: 40°C
Detector: RI
Eluent: tetrahydrofuran (flow rate 0.5 mL/minute)
Standard substance: polystyrene

### [Reference Example 3] Synthesis of a vinyl polymer

In a flask equipped with a dropping device, a stirrer, a thermometer, a condenser tube, and an inlet tube for a nitrogen gas, 150 g of methyl isobutyl ketone was placed, and was heated to 100°C. Subsequently, after the atmosphere in the flask was replaced with nitrogen, a mixture comprising 75.0 g of 5-(methacryloyloxymethyl)-1,3-oxathiolane-2-thione, 75.0 g of styrene, and 0.5 g of 2,2'-azobis-2-methylbutyronitrile as a polymerization catalyst was dropwise added thereto over 2 hours at the same temperature. After the completion of the dropping, the reaction mixture was aged for 3 hours at 100°C to complete the polymerization, yielding a resin solution having a solid part in an amount of 50% by weight and having a weight average molecular weight of 30,000.

Subsequently, 25 times by volume of hexane was prepared, and purification by reprecipitation was slowly carried out at room temperature. The precipitated polymers were collected by filtration, and were subsequently dried under reduced pressure for 12 hours at 40°C, thus yielding 138 g of polymer powders (Polymer - 2).

### [Reference Example 4] Synthesis of a vinyl polymer

In a flask equipped with a dropping device, a stirrer, a thermometer, a condenser tube, and an inlet tube for a nitrogen gas, 75 g of methyl ethyl ketone was placed, and was heated to 80°C. Subsequently, after the atmosphere in the flask was replaced with nitrogen, a mixture comprising 75.0 g of 5-(methacryloyloxymethyl)-1,3-oxathiolane-2-thione, 75.0 g of styrene, and 30 g of 2,2'-azobis-2-methylbutyronitrile as a polymerization catalyst was dropwise added thereto over 2 hours at the same temperature. After the completion of the dropping, the reaction mixture was aged for 3 hours at 80°C to complete the polymerization, yielding a resin solution having a solid part in an amount of 69% by weight and having a weight average molecular weight of 5,100.

Subsequently, 25 times by volume of hexane was prepared, and purification by reprecipitation was slowly carried out at room temperature. The precipitated polymers were collected by filtration, and were subsequently dried under reduced pressure for 12 hours at 40°C, thus yielding 138 g of polymer powders (Polymer - 3).

### [Reference Example 5] Synthesis of a vinyl polymer

In a flask equipped with a dropping device, a stirrer, a thermometer, a condenser tube, and an inlet tube for a nitrogen gas, 50 g of methyl ethyl ketone was placed, and was heated to 80°C. Subsequently, after the atmosphere in the flask was replaced with nitrogen, a mixture comprising 75.0 g of 5-(methacryloyloxymethyl)-1,3-oxathiolane-2-thione, 75.0 g of 2-ethylhexyl acrylate, 25 g of methyl ethyl ketone, and 13 g of 2,2'-azobis-2-methylbutyronitrile as a polymerization catalyst was dropwise added thereto over 2 hours at the same temperature. After the completion of the dropping, the reaction mixture was aged for 3 hours at 80°C to complete the polymerization, yielding a resin solution having a solid part in an amount of 66% by weight and having a weight average molecular weight of 19,100.

Subsequently, 25 times by volume of hexane was prepared, and purification by reprecipitation was slowly carried out at room temperature. The precipitated polymers were collected by filtration, and were subsequently dried under reduced pressure for 10 hours at 50°C, thus yielding 133 g of polymer powders (Polymer - 4).

### [Examples 1 to 6 and Comparative Example 1]

The compositions of the present invention and the comparative composition were produced by mixing the components described in Table 1.

First, the components other than BRG-556 were kneaded by means of a biaxial roller at 100°C, and the kneaded mixture was pulverized and was formed into tablets. Subsequently, the tablets were hardened for 3 hours at 180°C. In the evaluation of adhesiveness, the products wherein a composition of the present invention or a comparative composition was applied to a copper plate, and was hardened in a manner similar to that described above were employed.

**Table 1**

| | Example | | | | | | Comparative Example |
|---|---|---|---|---|---|---|---|
| | 1 | 2 | 3 | 4 | 5 | 6 | 1 |
| Compound-1 | 40 | 20 | | | | | 20 |
| Polymer - 1 | | | 10 | | | | |
| Polymer- 2 | | | | 10 | | | |
| Polymer - 3 | | | | | 10 | | |
| Polymer - 4 | | | | | | 10 | |
| BRG-557 ¹⁾ | 40 | 40 | 40 | 40 | 40 | 40 | |
| E-1032 H60 ²⁾ | 20 | 40 | 50 | 50 | 50 | 50 | 50 |
| TPP ³⁾ | 0.1 | 0.1 | 0.1 | 0.1 | 0.1 | 0.1 | |
| Filler, silica ⁴⁾ | 1.0 | 1.0 | 1.0 | 1.0 | 1.0 | 1.0 | 1.0 |
| Polyamide amine ⁵⁾ | | | | | | | 30 |
| (unit: g) | | | | | | | |

Notes in Table 1 have the following meanings.
Note 1): Shonol BRG-557, produced by Showa Highpolymer Co., Ltd. (a phenol novolak resin: corresponding to a compound having two or more phenolic hydroxyl groups)
Note 2): Epicoat 1032H60, produced by Japan Epoxy Resin Co., Ltd. (an epoxy resin: corresponding to a compound having an epoxy group)
Note 3): Triphenylphosphine
Note 4): Employing spherical silica having an average particle size of 15 microns
Note 5): Polyamide amine: Epicure V-40, produced by Japan Epoxy Resin Co., Ltd.

Evaluations were carried out for the following items. (Evaluation of insulating property)

According to a method described in JIS K6911, intrinsic volume resistance was measured by a method with an applied voltage of 50 V for one minute, and the insulating property was evaluated.

### (Evaluation of adhesiveness)

Releasing resistance of a hardened product formed on a copper plate was evaluated by judging whether or not the hardened product could be removed manually by a person. The evaluation results are shown based on the evaluation criteria as follows.
ⓞ: The hardened product cannot be removed.
○: The hardened product can be slightly removed.
Δ: The hardened product can be easily removed.

The evaluation results are shown in Table 2.

**Table 2**

| | Example | | | | | | Comparative Example |
|---|---|---|---|---|---|---|---|
| | 1 | 2 | 3 | 4 | 5 | 6 | 1 |
| Intrinsic volume resistance (Ω· cm) | 8.0 × 10¹⁴ | 4.5 × 10¹⁴ | 7.1 × 10¹⁴ | 5.0 × 10¹⁴ | 5.3 × 10¹⁴ | 4.6 × 10¹⁴ | 6.3 × 10⁵ |
| Adhesiveness | ○ | ⓞ | ⓞ | ⓞ | ⓞ | ⓞ | ○ |

From Table 2, it is clear that the hardened products obtained by hardening the compositions of the present invention exhibit superior insulating property and adhesiveness.

### [Examples 7 to 9 and Comparative Example 2]

The compositions, each having a composition ratio shown in Table 3, were dissolved in methyl ethyl ketone so that the solid part thereof ranged from 65 to 75% by weight. Subsequently, each of the mixture solutions was impregnated in a glass cloth (thickness of 0.2 mm), followed by being dried for 4 minutes at 160°C, thus producing a prepreg. Eight prepregs were stacked, and copper foils with a thickness of 18 µm were stacked on both surfaces of the stacked prepregs, followed by thermal forming for 10 minutes at 180°C under a pressure of 4 MPa, thus producing a laminate having copper foils laminated on both surfaces thereof, which has a thickness of 1.6 mm.

By employing said laminate having copper foils laminated on both surfaces of the laminate, occurrences of layer separations during an outline punching processing, solder heat resistance, and glass transition temperature were measured. The results thereof are shown in Table 3. The test methods are described in the following.

Layer separations during an outline punching processing (measurement of the distance of the layer separations): The copper foils in the laminate having copper foils laminated on both surfaces thereof were removed by etching, thus preparing a sample. The sample was subjected to an outline punching processing by means of a DIN die. A separation distance of the copper foil from the edge of the punched surface after the punching processing was measured.

Solder heat resistance: According to JIS C6481, a test piece (50 mm × 50 mm) treated for 6 hours at 121°C under a pressure of 213,000 Pa in a pressure cooker treatment device was soaked in a solder bath heated to 260°C, for 30 seconds. Presence or absence of occurrences of blistering or the like were observed. The symbols for evaluation results described in Table 3 have the following meanings.
○: No changes
Δ: Occurrences of measling or lifting
×: Occurrences of blistering

Glass transition temperature (Tg): It was measured by means of a differential scanning colorimeter (DSC). The heating rate was 10°C/minute. The sample was heated until the temperature reached the glass transition temperature or higher, was subsequently cooled to room temperature, and again heated at a heating rate of 10°C/minute, thus measuring the glass transition temperature.

**Table 3**

| | Example | | | Comparative Example |
|---|---|---|---|---|
| | 7 | 8 | 9 | 2 |
| Compound - 1 | 5 | | | |
| Polymer -1 | | 5 | | |
| Polymer - 2 | | | 5 | |
| Epoxy resin⁶⁾ | 60 | 60 | 60 | 60 |
| Modified phenol resin⁷⁾ | 35 | 35 | 35 | 40 |
| Aluminum hydroxide⁸⁾ | 50 | 50 | 50 | 50 |
| Layer separation | 0.3 mm | 0.2 mm | 0.2 mm | 3 mm |
| Solder heat resistance | ○ | ○ | ○ | Δ |
| Glass transition temperature | 154°C | 158°C | 156°C | 148°C |

The unit of the values of the composition ratio is based on parts by weight.

Notes in Table 3 have the following meanings.
Note 6): "trade name: Epicoat YX4000H", produced by Japan Epoxy Resin Co., Ltd.
Note 7): Dicyclopentadiene type epoxy resin "trade name: EVA-7200H", produced by Dainippon Ink Chemical Industries Co., Ltd.
Note 8): "trade name: CL-303", produced by Sumitomo Chemical Industries Co., Ltd.

From Table 3, it is clear that the laminates having copper foils laminated on both surfaces thereof which include the hardened product obtained by the composition of the present invention result in a small number of layer separations, exhibit superior solder heat resistance, and have superior glass transition temperature.

According to the present invention, a composition which affords a hardened product exhibiting superior physical properties such as electrical insulating properties, adhesiveness, heat resistance, chemical resistance, weather resistance, moisture resistance, adhesion to metals, mechanical strength, or the like at the time of hardening the composition is provided.

## Claims

1. A composition comprising a compound having a group represented by the general formula (I): 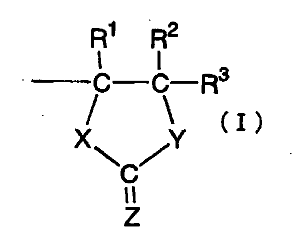 (in the formula, R¹, R², and R³ are identical or different, and represent a hydrogen atom or a lower alkyl group; X, Y, and Z are identical or different, and represent an oxygen atom or a sulfur atom, and at least two of X, Y, and Z represent a sulfur atom), and a compound having two or more acidic groups.

2. The composition according to Claim 1, wherein the compound having a group represented by the general formula (I) is a vinyl polymer having a structural unit represented by the general formula (II): 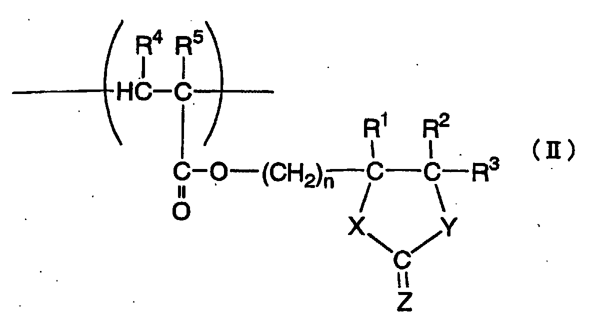 (in the formula, R¹, R², R³, X, Y, and Z have the same meanings as described above, respectively; n represents an integer of 1 to 4; and R⁴ and R⁵ are identical or different, and represent a hydrogen atom or a lower alkyl group).

3. The composition according to Claim 1, wherein the compound having a group represented by the general formula (I) is a compound represented by the general formula (III): 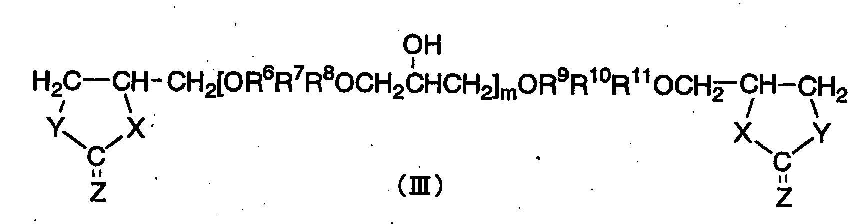 (in the formula, X, Y, and Z have the same meanings as described above, respectively; m represents an integer of 0 to 40; R⁶, R⁸, R⁹, and R¹¹ are identical or different, and represent a halogen-substituted or non-substituted phenylene or a halogen-substituted or non-substituted cyclohexylene; and R⁷ and R¹⁰ are identical or different, and represent methylene, C(CH₃)₂, an oxygen atom, CO, a sulfur atom, or SO₂).

4. The composition according to any one of Claims 1 to 3, wherein X represents an oxygen atom, and Y and Z represent a sulfur atom.

5. The composition according to any one of Claims 1 to 4, wherein the pKa of the acidic group is 11 or less.

6. The composition according to Claim 5, wherein the acidic group is a mercapto group, a phenolic hydroxyl group, or a carboxyl group.

7. The composition according to Claim 5, wherein the acidic group is a phenolic hydroxyl group.

8. The composition according to any one of Claims 1 to 7, comprising a compound having an epoxy group.

9. A sealant for semiconductors comprising the composition according to any one of Claims 1 to 8.

10. A hardened product obtained by hardening the composition according to any one of Claims 1 to 8.

11. A prepreg comprising the hardened product according to Claim 10.

12. A metal foil with a resin comprising the hardened product according to Claim 10.

13. An adhesive sheet comprising the hardened product according to Claim 10.

14. A laminate comprising the hardened product according to Claim 10.

15. A kit comprising a component including the compound having a group represented by the general formula (I) described in Claim 1 and a component including a compound having two or more acidic groups.
